(19)

**Europäisches Patentamt**
**European Patent Office**
**Office européen des brevets**

(11) **EP 4 651 096 A1**

(12) **EUROPEAN PATENT APPLICATION**

(43) Date of publication:
**19.11.2025 Bulletin 2025/47**

(21) Application number: **25176087.2**

(22) Date of filing: **13.05.2025**

(51) International Patent Classification (IPC):
**G06V 10/74** *(2022.01)*    **G06V 10/764** *(2022.01)*
**G06V 10/82** *(2022.01)*    **G06V 20/50** *(2022.01)*
**G06V 20/64** *(2022.01)*    **G06V 10/80** *(2022.01)*

(52) Cooperative Patent Classification (CPC):
**G06V 20/64; G06V 10/74; G06V 10/764;**
**G06V 10/80; G06V 10/82; G06V 20/50**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **16.05.2024   KR 20240064025**
        **26.07.2024   KR 20240099581**

(71) Applicants:
• **Samsung Electronics Co., Ltd**
  **Suwon-si, Gyeonggi-do 16677 (KR)**
• **Korea University Research and Business**
  **Foundation**
  **Seoul 02841 (KR)**

(72) Inventors:
• **LEE, Jiwon**
  **16678 Suwon-si (KR)**
• **KIM, Sangpil**
  **02841 Seoul (KR)**
• **KIM, Jinkyu**
  **02841 Seoul (KR)**
• **LEE, Dongwook**
  **16678 Suwon-si (KR)**
• **CHANG, Gyusam**
  **02841 Seoul (KR)**
• **JANG, Sujin**
  **16678 Suwon-si (KR)**
• **JI, Dae Hyun**
  **16678 Suwon-si (KR)**

(74) Representative: **Arnold & Siedsma**
    **Bezuidenhoutseweg 57**
    **2594 AC The Hague (NL)**

(54) **METHOD AND APPARATUS WITH THREE-DIMENSIONAL OBJECT DETECTION**

(57)    A method of detecting a three-dimensional (3D) object includes: extracting two-dimensional (2D) image features from images using an image backbone; extracting a 3D feature map, reflecting depth prediction information, from the 2D image features by using a view transformer configured to perform domain generalization; extracting a bird's eye view (BEV) feature from the 3D feature map by using a BEV encoder; and predicting a position of the object and a class of the object from the BEV feature by using a detection head.

FIG. 1

EP 4 651 096 A1

**Description**

BACKGROUND

1. Field

The following description relates to a method and apparatus with three-dimensional object detection.

2. Description of Related Art

Three-dimensional (3D) object detection generally involves collecting the 3D information of a surrounding environment by using sensors, for example multiple cameras or light detection and ranging (LiDAR), and detecting an object based on the collected 3D information. 3D object detection may be essential for the safe operation of autonomous vehicles or robots by recognizing other vehicles, pedestrians, obstacles, or the like.

The recent 3D object detection technology mainly uses expensive sensors, like LiDAR, or uses a method of estimating 3D information from a single view. However, LiDAR is expensive and uses complex data processing, and a single view may lower the accuracy of depth information. Therefore, a 3D object detection method using multi-view images may be beneficial to solving these problems.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a method of detecting a three-dimensional (3D) object includes: extracting two-dimensional (2D) image features from images using an image backbone; extracting a 3D feature map, reflecting depth prediction information, from the 2D image features by using a view transformer configured to perform domain generalization; extracting a bird's eye view (BEV) feature from the 3D feature map by using a BEV encoder; and predicting a position of the object and a class of the object from the BEV feature by using a detection head.

The 3D feature map may be extracted by a DepthNet predicting a depth output from the 2D image features and by inputting, into a BEV pool, an outer product of the depth output of the DepthNet and the 2D image features.

The view transformer may be configured to perform a relative depth normalization method that minimizes depth and position prediction errors caused by a difference in intrinsic/extrinsic parameters of a camera that provided one of the images.

Cameras, including the camera, may provide the respective images, and the relative depth normalization method may include calculating a transformation matrix through which geometric transformation is performed between adjacent pairs of the cameras from the intrinsic/extrinsic parameters.

The relative depth normalization method may obtain a relative depth after projecting an image feature onto an adjacent image feature by using the depth prediction information and the transformation matrix and minimizing a relative depth loss based on a depth loss function.

The view transformer may be configured to perform a photometric matching method using depth prediction to optimize alignment between an image and an adjacent image, based on the photometric matching method.

The image backbone, the view transformer, the BEV encoder, and/or the detection head may include respective domain adaptation adapters.

Each domain adaptation adapter may be added in parallel to an operation block to enable fine-tuning on parameters.

Each domain adaptation adapter may be configured to perform a skip connection in which features input to the view transformer, the BEV encoder, and/or the detection head are received, operated, and summed to update a gradient.

The method may further include augmenting the 3D feature map by performing a generalization method of decoupling-based image depth estimation.

In another general aspect, an electronic device includes: a memory storing instructions; and one or more processors, wherein the instructions, when performed by the one or more processors, cause the one or more processors to extract two-dimensional (2D) image features from images using an image backbone, extract a 3D feature map, reflecting depth prediction information, from the 2D image features by using a view transformer, extract a bird's eye view (BEV) feature from the 3D feature map by using a BEV encoder, and predict a position of the object and a class of the object from the BEV feature by using a detection head.

The 3D feature map may be extracted by DepthNet predicting a depth output from the 2D image features and by inputting, into a BEV pool, an output of the DepthNet and the 2D image features.

The view transformer may be configured to perform a relative depth normalization method that minimizes depth and position prediction errors caused by a difference in intrinsic/extrinsic parameters of a camera that provided one of the images.

Cameras, including the camera, may provide the respective images, and the relative depth normalization method may include calculating a transformation matrix through which geometric transformation is performed between adjacent pairs of the cameras from the intrinsic/extrinsic parameters and the camera.

The relative depth normalization method may obtain a relative depth after projecting an image feature onto an adjacent image feature by using the depth prediction information and the transformation matrix and minimizing a relative depth loss based on a depth loss function.

The view transformer may be configured to perform a photometric matching method using depth prediction to optimize alignment between an image and an adjacent image, based on the photometric matching method.

The image backbone, the view transformer, the BEV encoder, and/or the detection head may have respective domain adaptation adapters.

The domain adaptation adapters may temporarily supplant layers in the image backbone, the view transformer, the BEV encoder, and/or the detection head, respectively.

Each domain adaptation adapter may be configured to perform a skip connection in which features input to the corresponding view transformer, the BEV encoder, and/or the detection head are received, operated, and summed to update a gradient.

The 3D feature map may be augmented by performing a generalization method of decoupling-based image depth estimation.

Other features and aspects will be apparent from the following detailed description, the drawings, and the claims.

BRIEF DESCRIPTION OF THE DRAWINGS

FIG. 1 illustrates an example of a three-dimensional (3D) object detection method, according to one or more embodiments.

FIG. 2 illustrates an example of a 3D object detection device, according to one or more embodiments.

FIGS. 3 and 4 each illustrate operations of a view transformer, according to one or more embodiments.

FIG. 5 illustrates an example of an adapter, according to one or more embodiments.

FIG. 6 illustrates an example operations of an adapter, according to one or more embodiments.

FIG. 7 illustrates an example of a generalization method of decoupling-based image depth estimation, according to one or more embodiments.

FIG. 8 illustrates an example of an electronic device, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

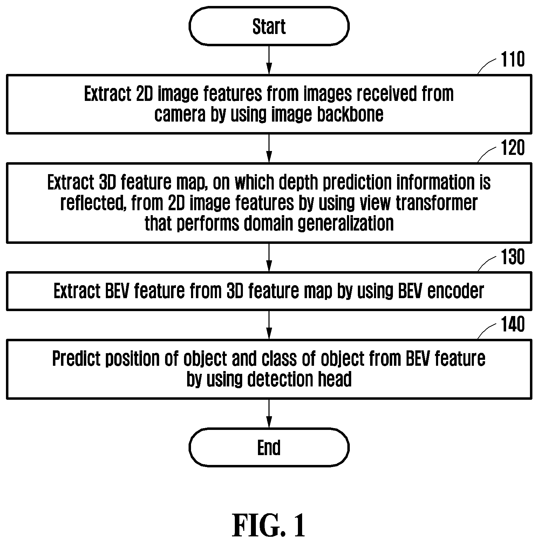

FIG. 1 illustrates an example of a three-dimensional (3D) object detection method, according to one or more embodiments.

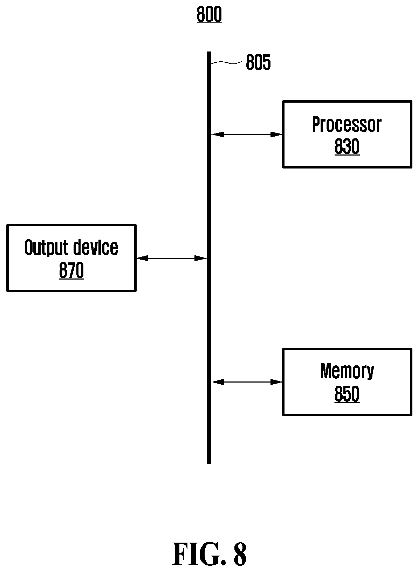

Operations 110 to 150 may be performed by an electronic device 800 illustrated in FIG. 8, or any other suitable electronic device in any suitable system.

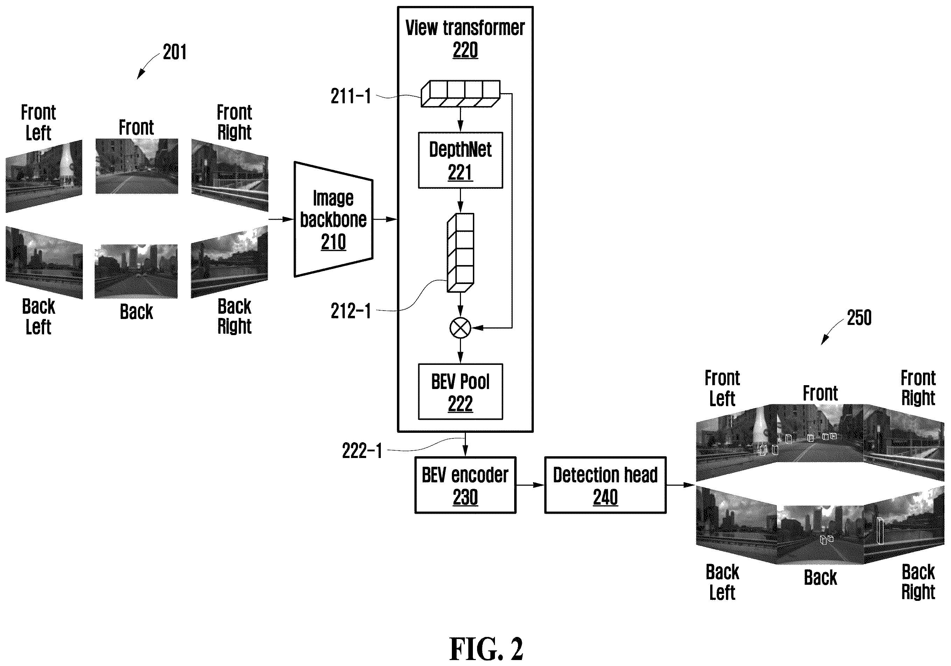

The electronic device 800 may include a 3D object detection device 200. Operations 110 to 150 are described with reference to FIG. 2.

FIG. 2 illustrates an example of a 3D object detection device, according to one or more embodiments.

Referring to FIG. 2, one or more blocks and a combination thereof may be implemented by a special-purpose hardware-based computer that performs a predetermined function and/or a combination of computer instructions and general-purpose hardware.

Referring to FIGS. 1 and 2 together, the electronic device 800 (e.g., the 3D object detection device 200) may include an image backbone 210, a view transformer 220, a bird's eye view (BEV) encoder 230, and a detection head 240. The view transformer 220 may include a DepthNet 221 and a BEV pool 222. The image backbone 210, the view transformer 220, the BEV encoder 230, and the detection head 240 may be implemented as respective neural network models.

In operation 110, the electronic device 200/800 may extract 2D image features 211-1 from images 201 received from respective cameras by using the image backbone 210. The images 201 may be from multiple viewpoints of the respective cameras. For example, the images 201 may include images from front, front left, front right, rear, rear left, rear right, or other camera viewpoints.

The electronic device 200/800 may perform camera parameter augmentation that may solve the problem of deviation of intrinsic/extrinsic camera parameters of an arbitrary camera. For an arbitrary image of the camera, the scale of the image, the parameters of the image, and a bounding box scale of the image may be randomly transformed during data augmentation. $T_{set} = \{T_1, T_2, T_3, \cdots, T_n\}$ is a set of matrices about the camera intrinsic (internal) parameters of n respective arbitrary cameras. An i-th element of $T_{set}$ (for an i-th camera) is expressed by Equation 1.

Equation 1

$$T_i = \begin{pmatrix} focal_x & 0 & center_u & 0 \\ 0 & focal_y & center_v & 0 \\ 0 & 0 & 1 & 0 \end{pmatrix}$$

In Equation 1, ($focal_x$, $focal_y$) denotes a focal length in x and y directions, and ($center_u$, $center_v$) denotes the center pixel coordinates of the i-th camera the notations $u$ and $v$ represent the pixel coordinates in the image plane. The electronic device 800 may convert $T_i$ into a randomly scaled matrix $\tilde{T}_i$ by multiplying the camera intrinsic parameter matrix by a scale factor $K$ expressed by homogeneous coordinates, that is, $\tilde{T}_i = K \cdot T_i$. The camera intrinsic parameters represent the characteristics of a camera itself (e.g., characteristics that are generally the same for any installation of the camera in a vehicle).

The set of camera extrinsic parameter matrices (e.g., $E_{set} = \{E_1, E_2, E_3, ... , E_n\}$) contains the camera extrinsic parameter matrices, each expressed by $E_i = [R|t]$. An extrinsic parameter is one that can vary for a given camera (e.g., may change from one vehicle installation to another). Here, R denotes rotation and t denotes translation. The electronic device 800 may perform data augmentation on a camera's extrinsic parameters, or camera extrinsic information, by randomly applying rescale and/or shift to (*yaw, pitch, roll*) and/or *height* related to the camera's installation. In short, the camera extrinsic parameters may represent the position and direction (orientation) of the camera.

A transformation matrix for an i-th camera, based on its intrinsic and extrinsic matrices $T_i$ and its $E_i$ is discussed below with reference to Equation 3.

Training an object recognition model with data obtained by data augmentation may enable the object recognition model to learn pieces of camera information under varied conditions, which may improve the generalization performance and adaptability of the object recognition model.

According to an embodiment, the image backbone 210 may be an image feature extractor that receives the images 201 and extracts the 2D image features 211-1. The 2D image features 211-1 may include visual information that can be used for detecting objects. Here, the image features may be collectively inferred from individual images but processed in a way that combines them into a unified representation. Specifically, each image may contributes its individual features (e.g., extracted using the image backbone), and these features may then be aggregated or transformed to represent the relationships between instances of the same object in different views or images. This approach enables detecting objects across multiple images while preserving their contextual and spatial information.

In operation 120, the electronic device 800 may extract a 3D feature map 222-1, which reflects predicted depth information. The 3D feature map 222-1 may be extracted from the 2D image features 211-1 by using the view transformer 220, which provides domain generalization. The view transformer 220 may perform domain generalization through a relative depth normalization method and 2D red, green, and blue (RGB) matching.

According to some embodiments, the view transformer 220 may extract/infer the 3D feature map 222-1 by (a) predicting a depth information (e.g., dept distribution prediction result 212-1) by using the DepthNet 221 (which predicts the depth information from the 2D image features 211-1) and (b) by inputting, into the BEV pool 222, a result of finding the outer product of (i) an output of the DepthNet 221 (the depth information) and (ii) the corresponding 2D image features 211-1. Details of the view transformer 220 are described next.

Birds-eye view (BEV) refers to a visualization method (or a form of data) generally used in vehicles or robots and may involve projecting 3D information onto a 2D plane as if the 3D information is viewed from above, which may be done through data collected from cameras or sensors.

In some embodiments, the DepthNet 221 may predict a depth by receiving the 2D image features 211-1 as an input, may calculate the depth information of the image(s) therefrom, and may generate a depth distribution prediction result 212-1. The view transformer 220 may generate the 3D feature map 222-1 by passing, through the BEV pool 222, the outer product of (i) the 2D image features 211-1 and (ii) the depth distribution prediction result 212-1. The BEV pool 222 may generate the 3D feature map 222-1 by projecting the outer product result onto a 3D space.

In some implementations, the view transformer 220 may perform a relative depth normalization method that minimizes depth and position prediction errors caused by a difference in intrinsic/extrinsic parameters of cameras that provided images 201. In this case, the relative depth normalization method may involve calculating a transformation matrix through which geometric transformation is performed between adjacent cameras from an input of the intrinsic/extrinsic parameters. In addition, the relative depth normalization method may involve obtaining a relative depth after projecting an image feature onto an adjacent image feature by using the depth prediction information and the transformation matrix and minimizing a relative depth loss based on a depth loss function.

The view transformer 220 may perform a photometric matching method using depth prediction to optimize alignment between adjacent images, based on the photometric matching method. The optical matching method may include an RGB matching method and/or a photometric matching method.

The electronic device 800 may augment the 3D feature map 222-1 by performing a generalization method of decoupling-based image depth estimation. The generalization method of decoupling-based image depth estimation may entail using camera extrinsic parameters and may improve the generalization performance of a model through respectively consistent depth predictions of an original image and a view-transformed image.

In operation 130, the electronic device 800 may extract a BEV feature from the 3D feature map 222-1 by using the BEV encoder 230. The BEV encoder 230 may encode the 3D feature map 222-1 into the BEV feature, which may be outputted from the BEV encoder 230.

In operation 140, the electronic device 800 may receive the BEV feature and may predict a position of an object and a class of the object from the BEV feature by using the detection head 240. The detection head 240 may predict the position and class of the object based on the BEV feature; more than one object may be so detected/predicted. Accordingly, the detection head 240 may finally generate an object detection result 250. An object detection result may be a final output obtained by completing object detection in a 3D space. The object detection result for an object may include position coordinates of the object (e.g., x, y, and z coordinates), dimensions of the object or a bounding box thereof (e.g., width, length, and/or height), a direction of the object (e.g., a traveling direction), and/or a class of the object.

The electronic device 800 may predict the position and class of the object through a region of interest alignment (RoIAlign) operation in the 3D space. The RoIAlign operation may align an RoI to enable accurate object classification and position detection.

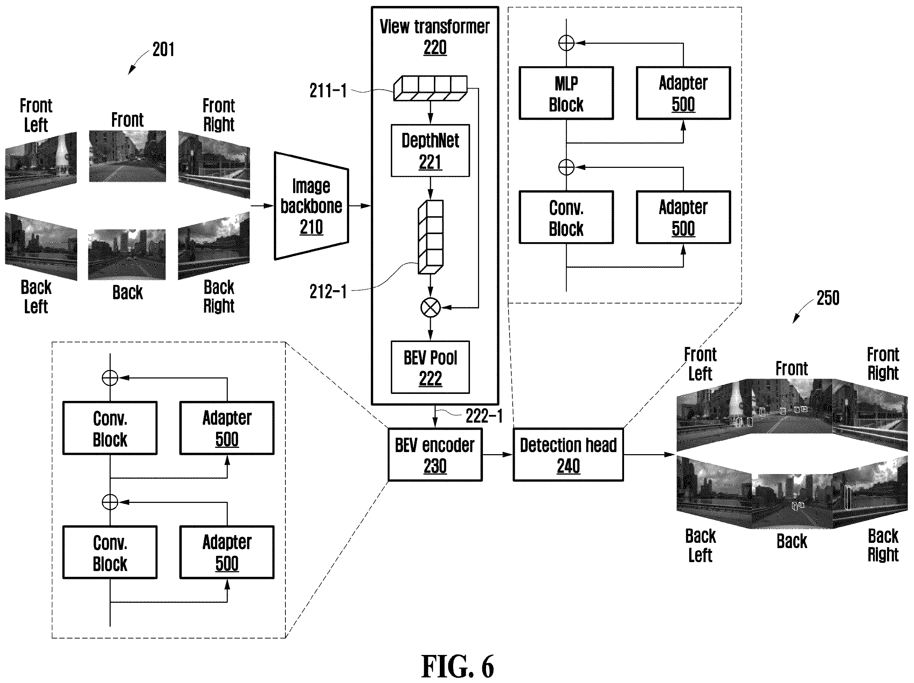

The image backbone 210, the view transformer 220, the BEV encoder 230, and the detection head 240 ("network components") may include (or be supplemented by) respective domain adaptation adapters (in some implementations, only one or several of the network components may have an adapter). The electronic device 800 may perform domain generalization through an adapter. Adapter(s) may be added in parallel to operation blocks (e.g., layers included in the network components) and may perform fine-tuning on parameters (see the adapter(s) 500 in FIG. 6, for examples). An adapter included in a network component may perform a skip connection in which features input to the network component are received, operated, and summed to update a gradient.

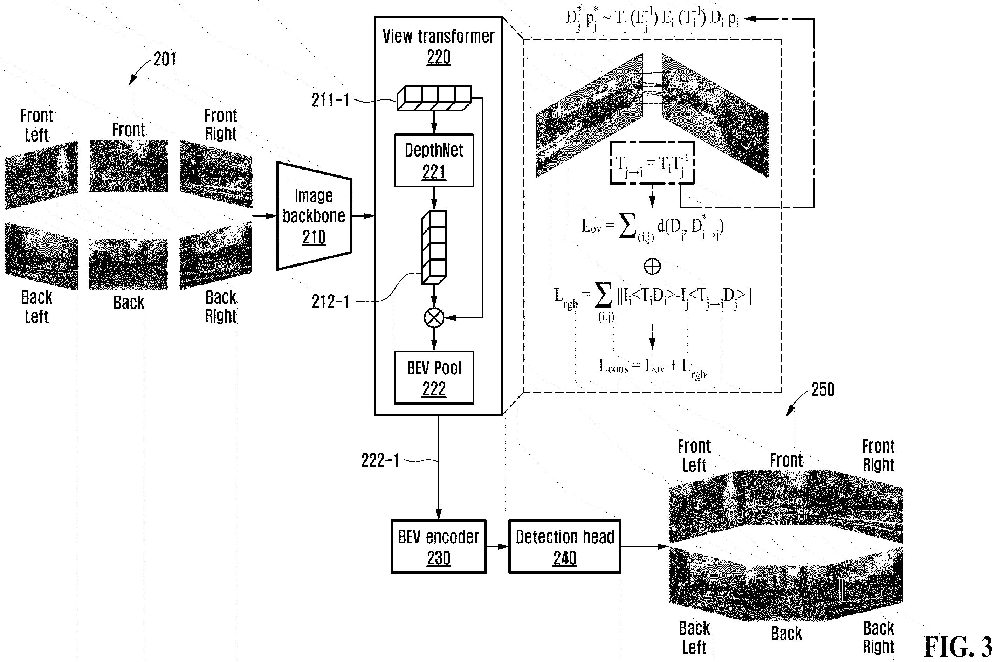

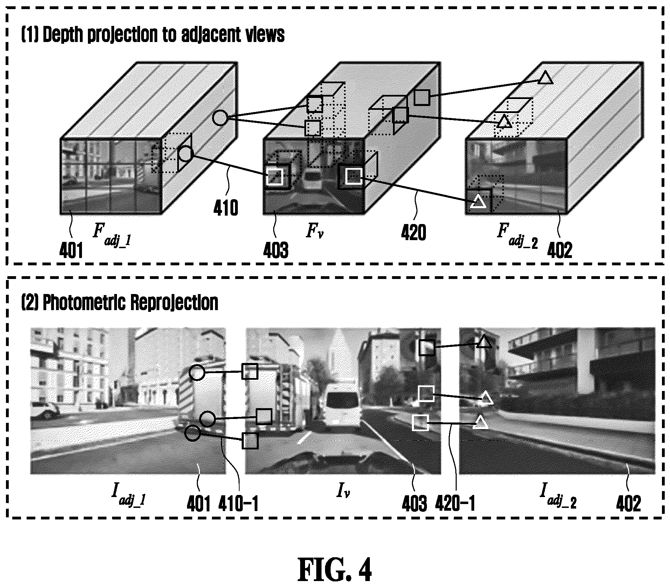

FIGS. 3 and 4 each illustrate operations of a view transformer, according to one or more embodiments.

The description provided with reference to FIGS. 1 and 2 is generally applicable to FIGS. 3 and 4.

Referring to FIG. 3, the view transformer 220 may generate the 3D feature map 222-1 in which depth prediction information is reflected by receiving the 2D image features 211-1 (for $F = V(I)$, $V$ denote 2D image feature extractors, and F denotes the 2D image features 211-1 extracted through the image backbone 210 (a feature extractor)) extracted from the images 201 (for $I = \{i_1, i_2, ..., i_n\} \in \mathbb{R}^{N \times H \times W \times 3}$, $I$ denotes a set of images i (with height H, width W, number of channels 3(e.g., RGB) of channels and n represents the batch index, and each element $i_k$ represents N images (with height H, width W, number of channels 3) from the $k_{th}$ batch) by using the image backbone 210.

The view transformer 220 may extract the depth distribution prediction result 212-1 (for $D = \mathcal{D}(F)$, $D$ denotes depth prediction results, $\mathcal{D}$ denotes DepthNet 221, and $F$ denotes image features 211-1) by predicting a depth from the 2D image features 211-1 by using DepthNet 221. The view transformer 220 may obtain a 3D volume based on an outer product of (i) the 2D image features 211-1 $F$ and (ii) the depth distribution prediction result 212-1 $D$. Referring to some of the mathematical notation in FIG. 3, $F_{bev}$ denotes the 3D feature map 222-1 (the outer product projected onto a 3D BEV space). $\mathcal{P}$ denotes a projection operation, as mentioned above, $T$ denotes a matrix related to camera intrinsic parameters, and E denotes a matrix related to camera extrinsic parameters. The view transformer 220 may extract/generate the 3D feature map 222-1 by inputting the outer product result into the BEV pool 222.

The 3D volume may be a data representation of a 3D space generated by combining depth information with the 2D image features 211-1. Here, the depth information may be values representing how far away respective pixels are in a 3D space. Each pixel or each feature may have a position in the 3D space represented in the 3D volume. This information may be used for object recognition.

Referring to FIGS. 3 and 4, when integrating/combining the depth distribution prediction result 212-1 with the 2D image features 211-1, the view transformer 220 may minimize depth and prediction errors caused by a difference in camera intrinsic/extrinsic parameters of adjacent cameras and may do so through a relative depth normalization method; depth prediction may be used to optimize the alignment between adjacent images through a photometric matching method.

The view transformer 220 may perform an operation using a transformation matrix through which geometric transformation is performed between adjacent cameras (an i-th camera and a j-th camera in the notation below) from an input of the intrinsic/extrinsic parameters as shown in Equation 2.

Equation 2

$$T_{j \to i} = T_i T_j^{-1}, E_{j \to i} = \left(E_j^{-1}\right) E_i$$

Equation 3

$$D_j^* p_j^* \sim \boldsymbol{T_j\left(E_j^{-1}\right)E_i\left(T_i^{-1}\right)} D_i p_i$$

The bold part of Equation 3, $\left(T_j\left(E_j^{-1}\right)E_i\left(T_i^{-1}\right)\right)$ may be the transformation matrix mentioned above.

Equation 3 formulates a corresponding depth $D_j^*$ by using spatial and temporal adjacent views. The view transformer 220 may perform coordinate transformation between views of respective different cameras by using camera intrinsic parameter T and camera extrinsic parameter E by performing the operation of Equation 3. In Equation 3, $p_j^*$ and $p_i$ denote pixels corresponding to each other between respective adjacent views, $D_j$ denotes depth prediction, and $D_j^*$ denotes the depth prediction by the corresponding pixels.

Here, $p_i$ represents pixel coordinates of a camera i. A matrix $T_i$ is an intrinsic parameter matrix of camera i. $T_i$ may include information including a focal length of a camera and the center coordinates of the camera. Matrix $T_{j \to i} = T_i T_j^{-1}$ is an intrinsic parameter transformation matrix for transforming from the camera j intrinsic parameters to the camera i intrinsic parameters. Matrix $E_{j \to i} = \left(E_j^{-1}\right)E_i$ is an extrinsic parameter transformation matrix for transforming from the camera j extrinsic parameters to the camera i extrinsic parameters. The matrix $E_{j \to i}$ may include a rotation matrix and a translation vector. An extrinsic parameter matrix E represents a relative position and direction/orientation between cameras. The electronic device 800 may use an extrinsic parameter matrix to transform a 3D point observed by a camera *i* into a coordinate system of camera *j*. $D_j^* p_j^*$ denotes a depth value of a corresponding pixel in a camera j, and $p_j^*$ denotes corresponding pixel coordinates in a camera j. $T_j^{-1}$ is the inverse matrix of the intrinsic parameter matrix of a camera j. $T_j^{-1}$ may be used to transform pixel coordinates of a camera *j* into a normalized camera coordinate system.

The view transformer 220 may minimize a depth prediction difference between cameras through a depth loss function. The depth loss function $L_{ov}$ is expressed by Equation 4 below. The depth loss function may minimize a difference between depth predictions of two cameras *i* and *j*. By doing so, the view transformer 220 may obtain consistent depth information from different viewpoints. In other words, the view transformer 220 may minimize the depth prediction difference through the depth loss function to minimize a difference between a corresponding depth prediction result $D_j^*$ predicted from a corresponding pixel and a depth prediction result $D_j$.

Equation 4

$$L_{ov} = \sum_{(i,j)} d\left(D_j, D_{i \to j}^*\right)$$

Here, *d* denotes a Euclidean distance. The view transformer 220 may operate to minimize an error by calculating a difference between depth distribution predictions for each camera pair through the depth loss function. In the context of this passage, the depth loss function plays a role in ensuring consistent depth predictions across multiple viewpoints. By minimizing the loss calculated for each camera pair, the model aligns depth distribution predictions to achieve greater accuracy and reliability. In one implementation, the depth loss function may be configured to compare pairs of cameras. Although the pairs may be only adjacent pairs, the implementation is not limited in this way. Adjacent viewpoints may be used, as they provide geometrically relevant depth information. However, the implementation may extend to all possible pairs, depending on the use case and computational resources.

The view transformer 220 may minimize depth distribution prediction normalization through the depth loss function. The depth loss function may compare depth distribution prediction values obtained from multiple viewpoints for the view transformer 220's consistent depth distribution predictions. The depth loss function may enable consistent recognition of the same object from various viewpoints. Further regarding use of the depth loss function, the calculated difference, as quantified by the depth loss function, is used to iteratively update the model's weights during the training process. Specifically, the depth loss function may evaluate the consistency of depth predictions across multiple viewpoints, with the purpose of minimizing discrepancies in depth estimation for the same object observed from different angles. The calculated loss serves as an error signal, which is backpropagated through the neural network to adjust the model's weights. Each weight's adjustment may be proportional to its contribution to the loss, ensuring that the network learns effectively from the error signal. In this context, the depth loss function is central to achieving consistent depth distribution predictions across various camera viewpoints. By minimizing this loss, the model may be configured to ensure geometric consistency and reliable depth estimation, which are beneficial for tasks such as 3D object detection and recognition.

The view transformer 220 may maintain geometric consistency through the depth loss function. The view transformer 220 may normalize a geometric relationship between cameras through a transformation matrix for consistent depth predictions even in images captured at various angles. In conclusion, the view transformer 220 may provide domain generalization. The view transformer 220 may maintain consistent performance in various domains by preventing a model from overfitting even in a limited data environment.

For example, assume that two cameras $i$ and j capture the same scene at different angles. The cameras may generate $D_i$ and $D_j$, respectively, by predicting depth information of the scene. In this case, a depth prediction $D_j$ of the camera j may be transformed into a coordinate system $i$ by using a transformation matrix. Then, the view transformer 220 may calculate a loss value by comparing a depth distribution prediction value of the camera $i$ with the transformed depth distribution prediction value of camera j.

According to an embodiment, the view transformer 220 may perform an RGB matching method among photometric matching methods. The RGB matching method may minimize an image difference between different cameras through an RGB loss function. The view transformer 220 may minimize a difference between images based on depth information through the RGB loss function. The RGB loss function is expressed by Equation 5 below.

Equation 5

$$\mathcal{L}_{rgb} = \sum_{(i,j)} \left\| I_i \langle T_i D_i \rangle - I_j \langle T_{j\to i} D_j \rangle \right\|$$

Here, $I_i$ and $I_j$ are images of cameras $i$ and $j$, respectively. $T_i$ is a n intrinsic parameter matrix of the camera $i$, and $D_i$ is a depth prediction value of the camera $i$. $T_{j\to i}$ is an intrinsic parameter transformation matrix for a transform from the camera j to the camera $i$, and $D_j$ is a depth prediction value of the camera j. The view transformer 220 may calculate and minimize a difference between images for each camera pair through the RGB loss function.

The view transformer 220 may maintain consistent visual information by comparing images of different cameras through the RGB loss function. In conclusion, the view transformer 220 may provide domain generalization through the RGB loss function.

For example, assume that two cameras $i$ and $j$ capture the same scene from different viewpoints. Since each camera captures the same object from different angles, there will be a difference between their two images. The view transformer 220 may minimize positional-related errors by performing the alignment between 2D images through 2D RGB matching by comparing an actual image with depth information predicted by each camera through the RGB loss function.

In some embodiments, the view transformer 220 may perform a photometric matching method among. The view transformer 220 may minimize an image difference between different cameras through the photometric loss function. The view transformer 220 may minimize a difference between images based on depth information through the photometric loss function. The photometric loss function is expressed by Equation 6 below.

Equation 6

$$L_p = \sum_i pe\big(I_i \langle T_i, P_i^* \rangle, I_j \langle T_j, E_{i\to j}, P_i^* \rangle\big)$$

Here, $P_i^*$ denotes a point cloud of an image $I_i$, and pe denotes a photometric error calculated through structural similarity index measure (SSIM). $\langle \cdot \rangle$ denotes bilinear sampling in an image. The SSIM may measure a similarity between two images and may be mainly used to evaluate a similarity between an original image and a compressed image. The SSIM mimics the way the human visual system recognizes the structural information of an image, and an SSIM index has a value between 0 to 1, with 0 being dissimilar and 1 being similar.

Referring to FIG. 4, the view transformer 220 may perform depth projection to adjacent views and photometric reprojection by using the depth and geometric information between images.

For depth projection to adjacent views, a central view feature $F_v$ may include depth information and 2D image features extracted through the image backbone 210. The view transformer 220 may perform projection to adjacent views by using the depth information in a central view 403. First adjacent view projection 410 is the projection of a first adjacent view feature $F_{adj\_1}$ based on the depth information extracted from the central view feature $F_v$. In this process, a depth value of each pixel may be converted into coordinates of a first adjacent view 401 and then projected. Second adjacent view projection 420 is the projection of a second adjacent view feature $F_{adj\_2}$ based on the depth information extracted from the central view feature $F_v$. In this process, a depth value of each pixel may be converted into coordinates of a second adjacent view 402 and then projected. The view transformer 220 may perform geometric transformation to adjacent views based on a depth value of each pixel through the depth projection to adjacent views. The depth projection to adjacent views may be performed by using camera parameters, and depth information may be propagated to the adjacent views through geometric transformation.

For photometric reprojection, a central image $I_v$ may be an actual image observed in the central view 403. First adjacent view reprojection 410-1 is reprojection from the central image $I_v$ to a first adjacent image $I_{adj\_1}$. In this process, the coordinates of each pixel may be converted into the first adjacent view 401 by using depth information. Second adjacent view reprojection 420-1 is a reprojection from the central image $I_v$ to a second adjacent image $I_{adj\_2}$. In this process, the coordinates of each pixel may be converted into the second adjacent view 402 by using depth information. The photometric reprojection may transform a pixel value of an actual image into an adjacent view based on a depth projection result. The view transformer 220 may perform photometric transformation to adjacent views while maintaining the consistency of pixel values through the photometric reprojection.

The view transformer 220 may improve the accuracy of 3D object detection through a final loss function ($\mathcal{L}_{cons}$ or $L_{total}$) like Equation 7 or 8, which integrates said loss functions.

Equation 7

$$\mathcal{L}_{cons} = \mathcal{L}_{ov} + \mathcal{L}_{rgb}$$

Equation 8

$$L_{total} = \lambda_{det} L_{det} + \lambda_{ov} L_{ov} + \lambda_p L_p$$

Here, to optimize $L_{det}$, $L_{ov}$, and $L_p$, grid searches $\lambda_{det}$, $\lambda_{ov}$, and $\lambda_p$ may be used, wherein $L_{det}$ denotes a detection task loss. In conclusion, the view transformer 220 may alleviate the difference between time points by constraining the corresponding depth between multi-views.

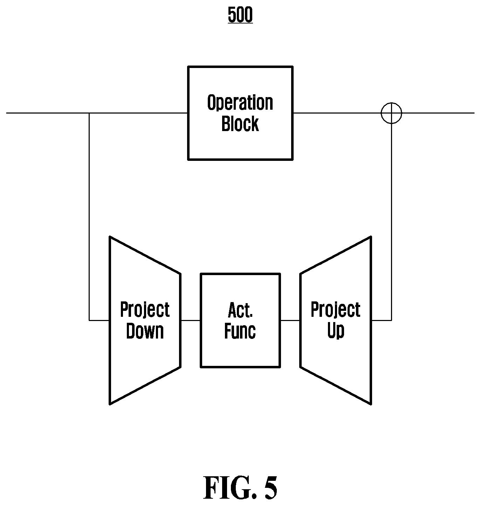

FIG. 5 illustrates an example of an adapter, according to one or more embodiments.

The description provided with reference to FIGS. 1 to 4 is generally applicable to FIG. 5.

FIG. 5 illustrates an adapter 500 to which label-efficient domain adaptation (LEDA) is applied. LEDA may improve domain adaptation performance by applying a PEFT (Parameter Efficient Fine-Tuning) method that fixes the parameters of a pre-trained network (e.g., the image backbone 210, the view transformer 220 (or DepthNet 221), the BEV encoder 230, and the detection head 240) and fine-tunes only a relatively small number of parameters of the adapter 500, which is additionally provided. The adapter 500 may be implemented in a plug-in manner such that catastrophic forgetting may not occur for a pre-trained weight.

PEFT may effectively fine-tune a small number of parameters while generally maintaining the parameters of a large language model (LLM), for example.

Instances of the adapter 500 may be connected in parallel to each operation block to replace/update the parameters of the image backbone 210, the view transformer 220, the BEV encoder 230, and/or the detection head 240. The adapter 500 has a bottleneck structure formed of project-up/down and may be updated by summing a value calculated through an operation block and a previous operation block. In this case, the parameters of the operation block are fixed, and thus are omitted in a gradient update process. A gradient update may be performed only on parameters corresponding to the adapter 500.

During the fine-tuning of the adapter 500, catastrophic forgetting may be inhibited. Fine-tuning may overwrite weights on data and prior tasks during the training of new data and tasks. PEFT may maintain pre-trained parameter values because the adapter 500, which is newly added (functionally speaking, e.g., activated, instantiated, etc.), is while connected in a plug-in manner thus maintaining the weights of previous parameters. As a result, the PEFT method, which may fine-tune a small number of parameters with a small amount of data, may not only improve adaptability to new domains but also enable maintenance of stable prediction for pre-trained domains.

The structure of the adapter 500 may be implemented for domain adaptation. The adapter 500 has a bottleneck (dimension reduction) structure formed of project-up layer(s) and project-down layer(s) and may use a skip connection method that receives, operates, and uses the same features as those of the pre-trained network (or network component). Domain adaptation performance may be gradually improved by performing a gradient update only on the adapter 500 while fixing (not changing) previous operation blocks.

The adapter 500 is expressed by Equation 7 below. A module is built in parallel with a pre-trained operation block B (e.g., a convolutional block (conv), a linear block, or an MLP (multilayer perceptron), for example).

Equation 9

$$y = B(x) + \phi_{up}(\sigma(\phi_{down}(BN(x))))$$

Here, $\phi_{down}$ and $\phi_{up}$ respectively denote a projection-down layer and a projection-up layer. $\sigma$ denotes an activation function ("Act. Func" in FIG. 5). BN denotes batch normalization. First, an input $x$ is input to the projection-down layer, is compressed to ($H/4, W/4$), and may be restored to ($H, W$) by using the projection-up layer. Then, outputs may be fused by using a skip connection. The adapter 500, expandable as such, may learn high-resolution detail information of the corresponding space while reducing network complexity and computational costs. Specifically, the adapter 500 may be initialized to have almost the same function to maintain pre-trained weights. Finally, the parallel plug-in adapter framework may achieve stable general domain adaptation (GDA) performance in possibly all of the source and target domains and may gradually adapt to unfamiliar domains while maintaining prior knowledge. Regarding the adapter 500 being initialized to have nearly the same function to maintain pre-trained weights, the "function" mentioned here refers to maintaining the functionality of the operation block with which the adapter 500 is connected in parallel. More specifically, the adapter 500 may be designed to complement the operation block's existing functionality while preserving the pre-trained weights. This configuration may ensure that the adapter operates as an extension of the operation block, enhancing its capabilities without disrupting its original purpose. The operation block, which could be a convolutional block, an MLP block, or similar structure, performs specific tasks such as feature extraction or transformation. By connecting the adapter 500 in parallel, the network achieves additional flexibility for domain adaptation while maintaining the stability of pre-trained weights. This may allow the model to adapt to new domains effectively, ensure stable performance across both familiar and unfamiliar domains. In sum, the adapter 500 may retain the function of the connected operation block while introducing the ability to fine-tune parameters in a controlled manner, thereby achieving the balance between adaptability and stability.

FIG. 6 illustrates an example of an operation of an adapter, according to one or more embodiments.

The description provided with reference to FIGS. 1 to 5 is generally applicable to FIG. 6.

FIG. 6 illustrates a parallel structure formed of an operation block (e.g., a Conv. block, an MLP block, etc.) and instances of the adapter 500 in the BEV encoder 230 and the detection head 240. The Conv. block may extract the spatial features of an image by performing a convolution operation and the adapter 500 may perform additional fine-tuning on parameters input to the Conv. block.

The MLP block may learn a complex relationship between feature vectors by performing an MLP operation, and the adapter 500 may improve domain adaptability by performing additional fine-tuning on parameters input to the MLP block. However, the Conv. block and the MLP block are just examples. Various other types of operation blocks (network components) may be included in the electronic device 800, and the order may also be changed.

In addition, the adapters 500 added in parallel to the respective operation blocks may be individually added to each of the operation blocks and parallelly added to multiple operation blocks. The Conv. block and the MLP block in the BEV encoder 230 and the detection head 240 are non-limiting examples. The adapter 500 may be applied to multiple operation blocks included in general BEV encoder 230 and detection head 240. Instances of the adapter 500 may also be applied to multiple respective operation blocks included in the image backbone 210 and the view transformer 220.

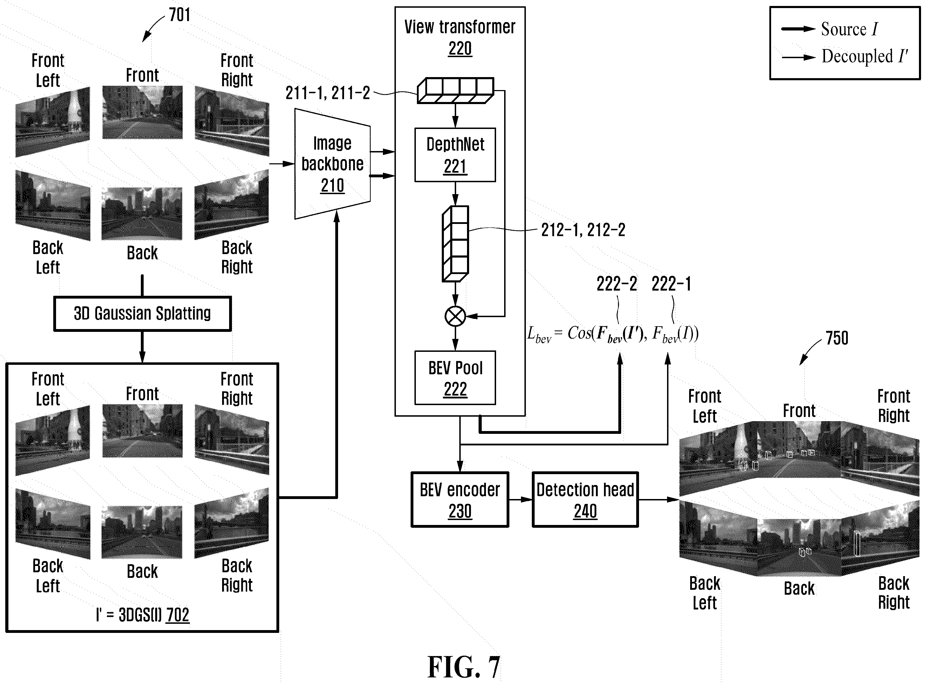

FIG. 7 illustrates an example of a generalization method of decoupling-based image depth estimation, according to one or more embodiments.

The description provided with reference to FIGS. 1 to 6 is generally applicable to FIG. 7.

Referring to FIG. 7, the electronic device 800 uses a camera extrinsic parameter decoupling-based image depth estimation generalization method to generate similar 3D feature maps through viewpoint transformation for related images (e.g., contemporaneously captured) such that consistent depth prediction may be performed from different viewpoints.

The electronic device 800 may receive multi-view original images 701 as an input. The electronic device 800 may apply a 3D Gaussian splatting (3DGS) method to the original images 701 *I* and may generate view-transformed decoupled images 702 *I'*. The 3DGS method may include generating an image from a different viewpoint by transforming the viewpoint of an input image.

The image backbone 210 may process the original input images 701 and the decoupled images 702 and may extract original image features 211-1 and decoupled image features 211-2, respectively. DepthNet 221 of the view transformer 220 may process the original image features 211-2 and the decoupled image features 211-1 and may generate an original depth distribution prediction result 212-1 and a decoupled depth distribution prediction result 212-2, respectively.

The view transformer 220 may input, to the BEV pool 222, the original outer product result of the original image features 211-1 and the original depth distribution prediction result 212-1 and the decoupled outer product result of the decoupled image features 211-1 and the decoupled depth distribution prediction result 212-2.

The BEV pool 222 may generate an original 3D feature map 222-1 $F_{bev}(I)$ and a decoupled 3D feature map 222-2 $F_{bev}(I')$ with the original outer product result and the decoupled outer product result as an input.

The BEV encoder 230 may extract a BEV feature by encoding a 3D feature map transmitted from the view transformer 220.

The detection head 240 may predict the position and class of an object by using the BEV feature transmitted from the BEV encoder 230. The electronic device 800 may finally generate a 3D object detection result 750 through the detection head 240.

The original images 701 $I$ and the decoupled images 702 $I'$ may be respectively transformed into the original 3D feature map 222-1 $F_{bev}(I)$ and the decoupled 3D feature map 222-2 $F_{bev}(I')$, which are 3D feature maps, through the image backbone 210 and the view transformer 220.

The electronic device 800 may perform consistent predictions from different viewpoints by calculating a Cosine similarity loss between the 3D feature maps.

The Cosine similarity loss function is expressed by Equation 10 below.

$$\text{Equation } 10$$

$$\mathcal{L}_{bev} = Cos(F_{bev}(I'), F_{bev}(I))$$

The electronic device 800 may perform consistent predictions in view-transformed images by measuring the similarity between the original 3D feature map 222-1 and the decoupled 3D feature map 222-2 through a Cosine similarity loss function.

With Cosine similarity, for two vectors, when their similarity value is close to 1 they have the same direction and when their similarity value is close to -1 they have different directions. The Cosine similarity loss function may be designed to have a smaller loss value as similarity increases by maximizing the similarity.

A high similarity may indicate that the 3D feature map between the original images 701 and the decoupled images 702 is similar. This may indicate that the electronic device 800 performs consistent predictions from two viewpoints. Accordingly, the electronic device 800 may perform consistent predictions from various viewpoints.

On the other hand, a low similarity may indicate that the 3D feature map between the original images 701 and the decoupled images 702 is not similar. This may indicate that the electronic device 800 is not performing consistent predictions from two viewpoints. In this case, the value of a loss function increases. Thus, the electronic device 800 may adjust parameters or may increase the similarity of networks.

FIG. 8 illustrates an example of an electronic device, according to one or more embodiments.

Referring to FIG. 8, the electronic device 800 (e.g., an autonomous vehicle and the 3D object detection device 200), according to an embodiment, may include a processor 830, a memory 850, and an output device 870 (e.g., a display). The processor 830, the memory 850, and the output device 870 may be connected to one another via a communication bus 805. In the process described above, for ease of description, the electronic device 800 may include the processor 830 for performing the at least one method described above or an algorithm corresponding to the at least one method.

The output device 870 may display a user interface related to a 3D object detection method provided by the processor 830.

The memory 850 may store data obtained from the 3D object detection method performed by the processor 830. In addition, the memory 850 may store various pieces of information generated in the process of the processor 830 described above. In addition, the memory 850 may store various pieces of data, programs, or the like. The memory 850 may include a volatile memory or a non-volatile memory. The memory 850 may include a large-capacity storage medium, like a hard disk, to store a variety of data.

In addition, the processor 830 may perform at least one method described with reference to FIGS. 1 to 7 or an algorithm corresponding to the at least one method. The processor 830 may be a hardware-implemented data processing device having a circuit that is physically structured to execute desired operations. For example, the desired operations may include code or instructions in a program. The processor 830 may be implemented as, for example, a central processing unit (CPU), a graphics processing unit (GPU), or a neural network processing unit (NPU), or the like, or a combination thereof. The hardware-implemented electronic device 800 may include, for example, a microprocessor, a CPU, a processor core, a multi-core processor, a multiprocessor, an application-specific integrated circuit (ASIC), and a field-programmable gate array (FPGA).

The processor 830 may execute a program and control the electronic device 800. Program code to be executed by the processor 830 may be stored in the memory 850.

The training process and operation algorithms described above may be executed on a server and applied to an autonomous vehicle or performed within the autonomous vehicle.

For example, the server may receive 2D images from the autonomous vehicle to use the received 2D images for 3D object detection and may transmit a 3D object detection result to the autonomous vehicle.

For another example, the autonomous vehicle may include an electronic device and processor for 3D object detection and may perform the 3D object detection by receiving 2D images from a camera of the autonomous vehicle.

The units described herein may be implemented using a hardware component, a software component and/or a combination thereof. A processing device may be implemented using one or more general-purpose or special-purpose computers, such as, for example, a processor, a controller and an arithmetic logic unit (ALU), a digital signal processor (DSP), a microcomputer, an FPGA, a programmable logic unit (PLU), a microprocessor, or any other device capable of responding to and executing instructions in a defined manner. The processing device may run an operating system (OS) and one or more software applications that run on the OS. The processing unit also may access, store, manipulate, process, and generate data in response to execution of the software. For purpose of simplicity, the description of a processing device is used as singular; however, one skilled in the art will appreciate that a processing device may include multiple processing elements and multiple types of processing elements. For example, a processing device may include multiple processors or a processor and a controller. In addition, different processing configurations are possible, such as parallel processors.

The software may include a computer program, a piece of code, an instruction, or combinations thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs and DVDs; magneto-optical media such as optical discs; and hardware devices that are specially configured to store and perform program instructions, such as read-only memory (ROM), random-access memory (RAM), flash memory, and the like. Examples of program instructions include both machine code, such as produced by a compiler, and files containing higher-level code that may be executed by the computer using an interpreter.

The computing apparatuses, the vehicles, the electronic devices, the processors, the memories, the image sensors, the vehicle/operation function hardware, the displays, the information output system and hardware, the storage devices, and other apparatuses, devices, units, modules, and components described herein with respect to FIGS. 1-8 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-8 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components.

Therefore, in addition to the above disclosure, the scope of the disclosure may also be defined by the claims, and all variations within the scope of the claims are to be construed as being included in the disclosure.

**Claims**

1.  A method of detecting a three-dimensional (3D) object, the method comprising:

    extracting two-dimensional (2D) image features from images using an image backbone;
    extracting a 3D feature map, the 3D feature map reflecting depth prediction information, from the 2D image features by using a view transformer configured to perform domain generalization;
extracting a bird's eye view (BEV) feature from the 3D feature map by using a BEV encoder; and
predicting a position of the object and a class of the object from the BEV feature by using a detection head.

2. The method of claim 1, wherein the 3D feature map is extracted by a DepthNet predicting a depth output from the 2D image features and by inputting, into a BEV pool, an outer product of the depth output of the DepthNet and the 2D image features.

3. The method of claim 1 or 2, wherein the view transformer is configured to perform a relative depth normalization method that minimizes depth and position prediction errors caused by a difference in intrinsic/extrinsic parameters of a camera that provided one of the images.

4. The method of claim 3, wherein cameras, including the camera, provide the respective images, and wherein the relative depth normalization method comprises calculating a transformation matrix through which geometric transformation is performed between adjacent pairs of the cameras from the intrinsic/extrinsic parameters.

5. The method of claim 4, wherein the relative depth normalization method obtains a relative depth after projecting an image feature onto an adjacent image feature by using the depth prediction information and the transformation matrix and minimizing a relative depth loss based on a depth loss function.

6. The method according to any of the previous claims, wherein the view transformer is configured to perform a photometric matching method using depth prediction to optimize alignment between an image and an adjacent image, based on the photometric matching method.

7. The method according to any of the previous claims, wherein the image backbone, the view transformer, the BEV encoder, and/or the detection head comprise respective domain adaptation adapters, wherein preferably each domain adaptation adapter is added in parallel to an operation block to enable fine-tuning on parameters.

8. The method of claim 7, wherein each domain adaptation adapter is configured to perform a skip connection in which features input to the view transformer, the BEV encoder, and/or the detection head are received, operated, and summed to update a gradient.

9. The method according to any of the previous claims, further comprising augmenting the 3D feature map by performing a generalization method of decoupling-based image depth estimation.

10. An electronic device comprising:

    a memory storing instructions; and
    one or more processors,
    wherein the instructions, when performed by the one or more processors, cause the one or more processors to

        extract two-dimensional (2D) image features from images using an image backbone,
        extract a 3D feature map, the 3D feature map reflecting depth prediction information, from the 2D image features by using a view transformer,
        extract a bird's eye view (BEV) feature from the 3D feature map by using a BEV encoder, and
        predict a position of the object and a class of the object from the BEV feature by using a detection head.

11. The electronic device of claim 10, wherein the instructions are configured to cause the one or more processors to perform the method as claimed in any of the claims 1-9 and/or wherein the 3D feature map is extracted by a DepthNet predicting a depth output from the 2D image features and by inputting, into a BEV pool, an output of the DepthNet and the 2D image features.

12. The electronic device of claim 10 or 11, wherein the view transformer is configured to perform a relative depth normalization method that minimizes depth and position prediction errors caused by a difference in intrinsic/extrinsic parameters of a camera that provided one of the images, preferably wherein cameras, including the camera, provide the respective images, and wherein the relative depth normalization method comprises calculating a transformation matrix through which geometric transformation is performed between adjacent pairs of the cameras from the intrinsic/extrinsic parameters and the camera, more preferably wherein the relative depth normalization method obtains a relative depth after projecting an image feature onto an adjacent image feature by using the depth prediction information and the transformation matrix and minimizing a relative depth loss based on a depth loss function.

13. The electronic device according to any of the claims 10-12, wherein the view transformer is configured to perform a photometric matching method using depth prediction to optimize alignment between an image and an adjacent image, based on the photometric matching method.

14. The electronic device according to any of the claims 10-13, wherein the image backbone, the view transformer, the BEV encoder, and/or the detection head have respective domain adaptation adapters, preferably wherein the domain adaptation adapters temporarily supplant layers in the image backbone, the view transformer, the BEV encoder, and/or the detection head, respectively, and/or wherein each domain adaptation adapter is configured to perform a skip connection in which features input to the corresponding view transformer, the BEV encoder, and/or the detection head are received, operated, and summed to update a gradient.

15. The electronic device according to any of the claims 10-14, wherein the 3D feature map is augmented by performing a generalization method of decoupling-based image depth estimation.

```
                    ┌──────────────┐
                    │    Start     │
                    └──────────────┘
                           │                              ⟋110
        ┌──────────────────▼──────────────────────────────┐
        │  Extract 2D image features from images received from │
        │       camera by using image backbone            │
        └──────────────────┬──────────────────────────────┘
                           │                              ⟋120
        ┌──────────────────▼──────────────────────────────┐
        │  Extract 3D feature map, on which depth prediction information is │
        │   reflected, from 2D image features by using view transformer    │
        │          that performs domain generalization    │
        └──────────────────┬──────────────────────────────┘
                           │                              ⟋130
        ┌──────────────────▼──────────────────────────────┐
        │  Extract BEV feature from 3D feature map by using BEV encoder │
        └──────────────────┬──────────────────────────────┘
                           │                              ⟋140
        ┌──────────────────▼──────────────────────────────┐
        │  Predict position of object and class of object from BEV feature │
        │              by using detection head            │
        └──────────────────┬──────────────────────────────┘
                           │
                    ┌──────▼───────┐
                    │     End      │
                    └──────────────┘
```

# FIG. 1

**FIG. 2**

**FIG. 3**

$$D_j^* \, p_j^* \sim T_j \, (E_j^{-1}) \, E_i \, (T_i^{-1}) \, D_i \, p_i$$

$$T_{j \to i} = T_i T_j^{-1}$$

$$L_{ov} = \sum_{(i,j)} d(D_j^*, D_{i \to j}^*)$$

$$L_{rgb} = \sum_{(i,j)} \| I_i \langle T_i D_i \rangle - I_j \langle T_{j \to i} D_j \rangle \|$$

$$L_{cons} = L_{ov} + L_{rgb}$$

View transformer 220

DepthNet 221

BEV Pool 222

BEV encoder 230

Detection head 240

Image backbone 210

211-1    212-1    222-1    201    250

Front Right    Front    Front Left    Back Right    Back    Back Left

**(1) Depth projection to adjacent views**

410

$F_{adj\_1}$
401

$F_v$
403

420

$F_{adj\_2}$ 402

**(2) Photometric Reprojection**

$I_{adj\_1}$ 401 410-1

$I_v$ 403 420-1

$I_{adj\_2}$ 402

FIG. 4

500

FIG. 5

**FIG. 6**

FIG. 7

$$L_{bev} = Cos(F_{bev}(I'), F_{bev}(I))$$

I' = 3DGS(I) 702

<u>800</u>

<u>805</u>

Processor
<u>830</u>

Output device
<u>870</u>

Memory
<u>850</u>

**FIG. 8**

Europäisches
Patentamt

European
Patent Office

Office européen
des brevets

# EUROPEAN SEARCH REPORT

**Application Number**

EP 25 17 6087

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIAMING LIU ET AL: "BEVUDA: Multi-geometric Space Alignments for Domain Adaptive BEV 3D Object Detection", ARXIV.ORG, CORNELL UNIVERSITY LIBRARY, 201 OLIN LIBRARY CORNELL UNIVERSITY ITHACA, NY 14853, 27 March 2024 (2024-03-27), XP091711158, | 1-5,7,8, 10-12,14 | INV. G06V10/74 G06V10/764 G06V10/82 G06V20/50 G06V20/64 G06V10/80 |
| A | * title * <br> * abstract * <br> * figures 2, 3 * <br> * tables I-III * <br> * page 2, column 1, paragraph 5 - page 5, column 2, line 8 * <br> ----- | 6,9,13, 15 | |
| A | HAO LU ET AL: "Towards Generalizable Multi-Camera 3D Object Detection via Perspective Debiasing", ARXIV.ORG, CORNELL UNIVERSITY LIBRARY, 201 OLIN LIBRARY CORNELL UNIVERSITY ITHACA, NY 14853, 17 October 2023 (2023-10-17), XP091638155, * abstract * <br> * figures 2, 3 * <br> * table 1 * <br> * page 2, paragraph 4 - page 7, paragraph 1 * <br> ----- | 1-15 | |

**TECHNICAL FIELDS SEARCHED (IPC)**

G06V

The present search report has been drawn up for all claims

| Place of search | Date of completion of the search | Examiner |
|---|---|---|
| The Hague | 22 July 2025 | Konya, Iuliu |

EPO FORM 1503 03.82 (P04C01)